# EUROPEAN PATENT APPLICATION

(11) **EP 4 366 455 A1**
(43) Date of publication of application: **08.05.2024**
(21) Application number: 23799128.6
(22) Date of filing: 14.03.2023
(51) Int. Cl.: H04W 76/27, H04W 76/20

(54) **COMMUNICATION METHOD, RESOURCE CONFIGURATION METHOD, DEVICE, NETWORK NODE, SYSTEM, AND MEDIUM**

(30) Priority: 06.05.2022 CN 202210489572
(71) Applicant: ZTE Corporation, Shenzhen, Guangdong 518057 (CN)
(72) Inventor: XU, Hui, Shenzhen, Guangdong 518057 (CN); DING, Jianfeng, Shenzhen, Guangdong 518057 (CN); HUA, Xiaoquan, Shenzhen, Guangdong 518057 (CN)
(74) Representative: Aipex B.V.
(86) International application number: PCT/CN2023/081246
(87) International publication number: WO 2023/213140

(57) **Abstract**

Provided are a communication method, a resource configuration method, a device, a network node, a system and a medium. The communication method is applied by a UE, where the UE includes multiple subscriber identity modules (SIMs), and the method includes: receiving information of a timer; in response to being in a connected state in a first network node corresponding to a first SIM and a change in a connection state in a second network node corresponding to a second SIM, sending indication information to the first network node; starting a timer, where the timer is started at a same moment when the indication information is sent; and receiving network resource information configured by the first network node according to the indication information.

## Description

### TECHNICAL FIELD

The present application relates to the field of wireless communication networks, for example, a communication method, a resource configuration method, a device, a network node, a system and a medium.

### BACKGROUND

Currently, a user equipment (UE) can support multiple subscriber identity modules (SIMs) and typically can support two universal subscriber identity modules (USIMs) that may belong to a same mobile network operator or different mobile network operators. Multiple USIMs are also referred to as MUSIM. Considering the cost and the efficiency of the communication, the UE with MUSIM generally uses a single radio frequency and a single baseband component, and the single radio frequency and the single baseband component are shared by the multiple USIMs, resulting in a number of problems affecting system performance. Assuming that in a case where a SIM-A of multiple USIMs of a UE is in a communication with a network-A, however the UE needs to occasionally detect a network B (corresponding to a SIM-B of the multiple USIMs of the UE) by, for example, reading paging channels, completing measurements or reading system messages, and such occasional detection operations on the network B may have an impact on the system performance. For example, the UE is in a radio resource control (RRC) connected state under a first base station corresponding to the SIM-A, and two radio frequency modules are needed to be occupied for communication. In a case where the UE enters or exits the RRC connected state under a second base station corresponding to the SIM-B, and the first base station where the UE is located is not aware of the entering or exiting the RRC connected state under the second base station, data transmitted from the first base station to the UE may be lost, causing the waste of network resources.

### SUMMARY

The present application provides a communication method, a resource configuration method, a device, a network node, a system and a medium.

An embodiment of the present application provides a communication method. The communication method is applied by a UE, and the UE includes multiple SIMs. The communication method includes: signalling information is received; in response to being in a connected state in a first network node corresponding to a first SIM and a change in a connection state in a second network node corresponding to a second SIM, indication information is sent to the first network node; the timer is started, where the timer is started at a same moment when the indication information is sent; and network resource information configured by the first network node according to the indication information is received.

An embodiment of the present application further provides a resource configuration method. The resource configuration method is applied by a first network node, and includes: information of a timer is sent to a UE; indication information sent by the UE in a case where the UE is in a connected state in a first network node corresponding to a first SIM and a change occurs in a connection state of the UE in a second network node corresponding to a second SIM is received; and a network resource for the UE is configured according to the indication information.

An embodiment of the present application further provides a UE. The UE includes multiple SIMs, a memory, a processor, and a computer program stored in the memory and executable on the processor. The processor implements the communication method described above when executing the computer program.

An embodiment of the present application further provides a first network node. The first network node includes a memory, a processor, and a computer program stored in the memory and executable on the processor. The processor implements the recourse configuration method described above when executing the computer program.

An embodiment of the present application further provides a communication system. The communication system includes the UE described above, the first network node described above, and a second network node.

An embodiment of the present application further provides a computer-readable storage medium. The computer-readable storage medium is configured to store a computer program, and the computer program, when executed by a processor, implements the communication method described above or the recourse configuration method described above.

### BRIEF DESCRIPTION OF DRAWINGS

FIG. 1 is a flowchart of a communication method according to an embodiment;
FIG. 2 is a communication schematic diagram among a UE, a first network node and a second network node according to an embodiment;
FIG. 3A is a schematic diagram of a communication process according to an embodiment;
FIG. 3B is a schematic diagram of a communication process according to an embodiment;
FIG. 3C is a schematic diagram of a communication process according to an embodiment;
FIG. 3D is a schematic diagram of a communication process according to an embodiment;
FIG. 4 is a flowchart of a resource configuration method according to an embodiment;
FIG. 5 is a structure diagram of a communication apparatus according to an embodiment;
FIG. 6 is a structure diagram of a resource configuration apparatus according to an embodiment;
FIG. 7 is a structure diagram of hardware of a UE according to an embodiment;
FIG. 8 is a structure diagram of hardware of a first network node according to an embodiment; and
FIG. 9 is a structure diagram of a communication system according to an embodiment.

### DETAILED DESCRIPTION

The present application is described hereinafter in conjunction with drawings and embodiments. It is to be understood that the embodiments described herein are intended to explain the present application and are not intended to limit the present application. It is to be noted that if not in collision, the embodiments and features therein in the present application may be combined with each other. Additionally, it is to be noted that for ease of description, only part, not all, of structures related to the present application are illustrated in the drawings.4

In the present application, communication systems are widely deployed for providing a variety of services such as voice, data, and video. The communication system includes a UE and a network node, and the network node, for example, is a base station (BS), an evolved Node B (eNB), a fifth generation (5G) generation NodeB (gNB), and etc. The UE may be a UE in third generation (3G), for example, in wideband code-division multiple access (WCDMA)), a UE in fourth generation (4G), for example, Long-Term Evolution (LTE), a UE in 5G, for example, New Radio (NR) and the like. The UE may also include a terminal in a future next generation communication system. The terminal and the UE are of the same concept in the present application. A base station or a cell refers to a station communicating with a UE. One network node includes multiple cells, and the communication link between a UE and a network node includes an uplink and a downlink. The uplink refers to a link via which the UE transmits data to the network node. The downlink refers to a link via which the network node transmits data to the UE. The embodiments of the present application do not limit the multiple access mode of a wireless communication system. The duplexing mode of communications is not limited herein either. For example, the embodiments of the present application may be applied in time-division duplexing (TDD), frequency-division duplexing (FDD), and other duplexing modes (e.g., full duplex).

Only one RRC connection exists between a UE and a network node, and the UE is in one of the following RRC states within the coverage of the network node: an RRC connected state (Connected), an RRC idle state (Idle), or an RRC inactive state (Inactive). In some networks, the UE can only be in two of the above RRC states: the RRC connected state and the RRC idle state. The RRC inactive state may be applicable to a 5G NR system.

The MUSIM UE in the present application may use dual USIM cards. It is to be noted that the MUSIM UE includes multiple USIM cards, that is, one UE includes more than two USIM cards, and the scheme for two USIM cards in the embodiments of the present application is also applicable to the UE using more than two USIM cards. The two USIM cards may belong to the same mobile operator or different mobile operators. The two USIM cards correspond to the same communication technology (both corresponding to 5G NR or LTE) or to different communication technologies (one card corresponding to LTE and the other card corresponding to NR). The two cards may be operated in a single-mode, a dual-mode or a multi-mode. The single-mode means that the SIM card can use only one network system, for example, LTE or 5G network system. The dual-mode means that the mobile phone card may use two network systems, for example, both LTE and NR network systems. The multi-mode means that one SIM card can simultaneously support more than two network systems, for example, all of the FDD-LTE, TD-LTE, and NR network systems.

In the embodiments of the present application, a communication method is provided to achieve the network communication of a UE with multiple SIM cards. When a UE, which is in an RRC connected state in a first network node, enters or exits an RRC connected state in a second network node, the UE may send a capability changed indication to the first network node, and the first network node may reconfigure network resources for the UE accordingly, thereby improving resource utilization. On this basis, the first network node may also configure or release an interval resource of an interval according to request information from the UE. In addition, a timer may be used to prevent the UE from repeatedly transmitting indication information or request information before the expiration of the timer, thereby reducing the waste of downlink network resources, lowering the uplink load, and improving the communication reliability and the network operation performance.

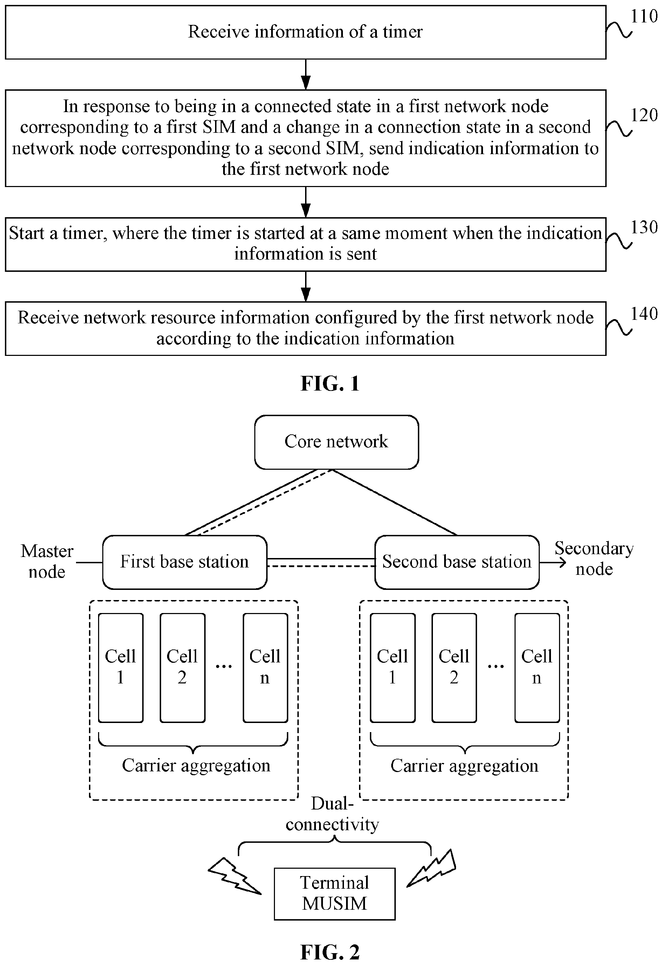

FIG. 1 is a flowchart of a communication method according to an embodiment. The method is applied by a UE, and the UE includes multiple SIMs. As shown in FIG. 1, the method provided in this embodiment includes the following operations 110-140.

In the operation 110, information of a timer is received.

In the operation 120, in response to being in a connected state in a first network node corresponding to a first SIM and a change in a connection state in a second network node corresponding to a second SIM, indication information is sent to the first network node.

In the operation 130, a timer is started, where the timer is started at a same moment when the indication information is sent.

In the operation 140, network resource information configured by the first network node according to the indication information is received.

In this embodiment, the UE has at least two SIMs, a first SIM corresponds to a first network node, and a second SIM corresponds to a second network node. When the UE is in an RRC connected state in the first network node and the RRC connection state of the UE in the second network node changes (for example, when the UE enters an RRC connected state or exits an RRC connected state), the UE may send indication information to the first network node to notify the first network node of a change in capability of the UE, and the first network node may configure a suitable network resource for the UE accordingly.

The information of the timer may be configured by the first network node and notified to the UE through an RRC signalling, and the UE starts the timer at a same moment when the UE sends the indication information and does not repeatedly send the indication information to the first network node before the expiration of the timer.

In an embodiment, the operation where the information of the timer is received includes: the information of the timer sent by the first network node is received before the indication information is sent to the first network node.

In an embodiment, the change in the RRC connection state includes: entering or exiting an RRC connected state in the second network node, where the UE is in a carrier aggregation (CA) mode or a dual-connectivity (DC) mode.

FIG. 2 is a communication schematic diagram among a UE, a first network node and a second network node according to an embodiment. As shown in FIG. 2, the CAmode is applicable to a UE in an RRC connected state, and in the CA mode, the UE can communicate with multiple serving cells, where one serving cell is a master cell and the other serving cells are secondary cells for uplink communication or downlink communication. The secondary cells may be added or deleted by the master cell through an RRC signalling. The CA mode can only be applied in a single network system, and in most time, refers to multiple CA under a same base station. In the DC mode, the UE maintains in connection with two network nodes or in two radio systems (for example, DC of the 4G and 5G base stations), and the UE in a connected state can use radio resources of at least two different network nodes. The network nodes are divided into a master node and a secondary node. In the DC mode, data is split at a packet data convergence protocol (PDCP) layer, while in the CA mode, data is split at a media access control (MAC) layer.

In an embodiment, the network resource information includes information of at least one of: a beam, a slot, or a bandwidth part (BWP); where the beam and the slot are indicated through a downlink RRC signalling and transmitted through a physical downlink shared channel (PDSCH), and the BWP is indicated through downlink control information (DCI) and transmitted through a physical downlink control channel (PDCCH).

In an embodiment, the method further includes operation 150, in which, before expiration of the timer, the timer is stopped at a same moment when the network resource information is received.

In this embodiment, the UE stops the timer before expiration of the timer at a same moment when the UE receives the network resource information. Thereafter, if the connection state of the UE in the second network node changes again, the UE may send the indication information to the first network node again.

In an embodiment, in a case where the change in the connection state is entering an RRC connected state in the second network node, the indication information includes capability limited indication information, and the capability limited indication information is used for indicating a change, with respect to the device communication capability of the UE before the change occurs in the connection state, in the device communication capability of the UE.

In an embodiment, in a case where the change in the connection state is exiting an RRC connected state in the second network node, the indication information includes capability recovered indication information, and the capability recovered indication information is used for indicating a change, with respect to the device communication capability of the UE before the change occurs in the connection state, in the device communication capability of the UE.

In this embodiment, the device communication capability includes a baseband communication capability and a radio frequency communication capability, and the UE may communicate with the network node using all or part of the device communication capability.

In an embodiment, the capability limited indication information includes at least one of: capability change information, cell release information or configuration resource deactivation information.

In an embodiment, the capability recovered indication information includes at least one of: capability change information or configuration resource activation information.

In this embodiment, the capability change includes capability limitation or capability recovery. The cell release means that for the CA mode or the DC mode, in order to enter the connected state in a second base station, the UE which is in the connected state in the first network node needs to release part or all of the secondary cells. The configuration resource activation means that when the UE which is in the connected state in the first network node exits a connected state in the second base station, the UE communicates with the first network node using part or all of the configuration resources. The configuration resource deactivation means that when the UE which is in the connected state in the first network node enters a connected state in the second base station, the UE stops communicating with the first network node using part or all of the configuration resources.

In an embodiment, the capability change information is indicated through a bitmap and is carried through an uplink RRC signalling.

In an embodiment, in a case where the change in the connection state is entering an RRC connected state in the second network node, the indication information includes interval request information, and the interval request information is used for indicating an interval configuration supported by the UE.

In an embodiment, the method further includes operation 160, in which, a connection with the second network node is established in an interval resource configured by the first network node according to indication information, and the connected state is maintained in the first network node.

In an embodiment, the interval configuration includes at least one of: an interval type or an interval length.

In an embodiment, the interval configuration further includes at least one of: an interval period, an interval subframe offset, a start radio frame number of an aperiodic interval or a radio subframe number.

In an embodiment, the indication information is not repeatedly sent before the expiration of the timer.

In an embodiment, the method further includes operation 170, in which, in response to receiving an RRC connection reconfiguration signalling, before expiration of the timer, the timer is stopped.

In an embodiment, the method further includes operation 180, in which, in response to having released an RRC connection with the first network node and entering an RRC connected state in the second network node, capability updated indication information is sent to the second network node, where the capability updated indication information is used for indicating a change, with respect to the device communication capability of the UE before the RRC connection is released, in the device communication capability of the UE.

In an embodiment, the method further includes operation 1902, in which, in response to being in the connected state in the first network node and exiting a connected state in the second network node, the first network node is communicated with according to the network resource information configured by the first network node.

In an embodiment, the method further includes operation 1904, in which, in response to having released an RRC connection with the first network node and exiting an RRC connected state in the second network node, selecting or reselecting a suitable cell to camp in the first network node or the second network node.

In an embodiment, the indication information is carried through an uplink RRC signalling and transmitted through a physical uplink shared channel (PUSCH).

The communication method described above will be described hereinafter through specific embodiments. In the following embodiments, a first base station serves as the first network node, and a second base station serves as the second network node.

### Embodiment one

In this embodiment, a communication process in a scenario of sending capability limited indication information for a CA/DC UE is described.

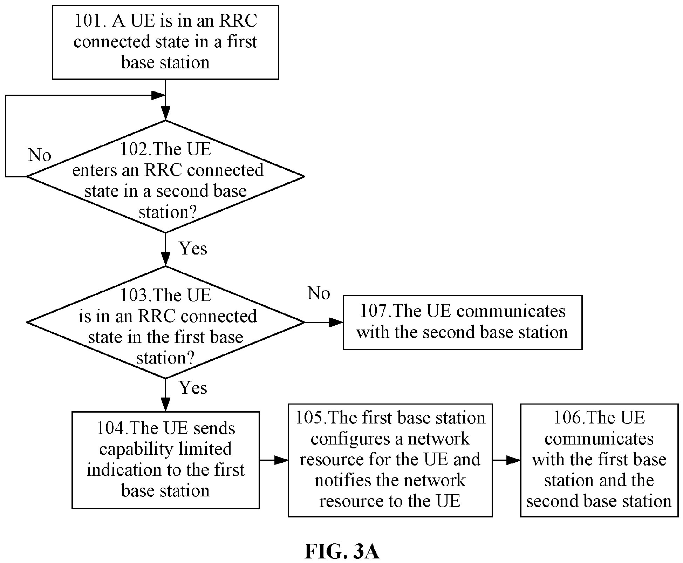

FIG. 3A is a schematic diagram of a communication process according to an embodiment. As shown in FIG. 3A, the communication process includes operations 101 to 107.

In operation 101, a MUSIM UE is in an RRC connected state in the first base station.

The MUSIM UE is dual transmitter/dual receiver, i.e., the UE includes two transceiver radio frequency devices, such as amplifiers, and antennas. The MUSIM UE is in a CA mode or a DC mode, and the MUSIM UE is performing communication using two radio frequency devices, such as two radio frequency devices that, for example, are connected to two base stations, respectively. The RRC connected state means that the MUSIM UE maintains uplink-downlink synchronization with the first base station and performs data receiving/transmitting with the first base station. It is assumed that the MUSIM UE contains two SIM cards that are a SIM-1 and a SIM-2, respectively, where the SIM-1 corresponds to the first base station, and the SIM-2 corresponds to the second base station, that is, the SIM-1 in the MUSIM UE has established an RRC connection with the first base station.

In operation 102, whether the MUSIM UE establishes an RRC connection in the second base station (whether the MUSIM UE enters an RRC connected state in the second base station) is determined. If the MUSIM UE establishes an RRC connection in the second base station, go to operation 103; otherwise, reperform the determination in operation 102.

The reason why the MUSIM UE establishes an RRC connection in the second base station includes, but is not limited to, one of the following: the MUSIM UE responds to a paging message of the second base station, the MUSIM UE performs a measurement in the second base station, or the MUSIM UE initiates a random access in the second base station.

In order to establish an RRC connection in the second base station, the MUSIM UE needs to send uplink information to the second base station and receive downlink information from the second base station, and the MUSIM UE needs to release a radio frequency device unit for establishing a connection between the SIM-2 and the second base station. If the MUSIM UE does not establish a connection in the second base station, the UE reperforms the determination in operation 102 to determine whether to establish a connection in the second base station.

In operation 103, whether the MUSIM UE maintains an RRC connection in the first base station is determined. If the MUSIM UE maintains an RRC connection in the first base station, go to operation 104; otherwise, go to operation 107.

During the establishment of the RRC connection in the second base station by the MUSIM UE, the UE may release an RRC connection in the first base station, for example, the UE may end the communication with the first base station, the communication link may fail, or the first base station may release the RRC connection with the UE. In order to maintain communication, the MUSIM UE maintains an RRC connection with the first base station.

In operation 104, the MUSIM UE sends capability limited indication information to the first base station.

The MUISM UE indicates the capability limitation information to the first base station through an RRC signalling. The RRC signalling may use UE assistant information (UAI), and the capability limited indication information indicates that the UE cannot use all the hardware capabilities, for example, the UE may use only one radio frequency device for communication.

The RRC signalling may be implemented in a bitmap manner. For example, whether two radio frequency devices are occupied is indicated using two bits b 1b2:
b1b2=11 indicates that the two radio frequency devices are occupied;
b1b2=00 indicates that the two radio frequency devices are idle; and
b1b2=01 or 10 indicates that one of the two radio frequency devices is occupied, and the other is idle.

Alternatively, whether two radio frequency devices are occupied may be indicated using one bit b. For example, b=0 indicates that the capability is limited, that is, one of the two radio frequency devices is occupied, and b=1 indicates that the capability is recovered, that is, the two radio frequency devices are available; or, b=0 indicates that the capability is limited, that is, one of the two radio frequency devices is occupied, and b=1 indicates that the capability is recovered, that is, the two radio frequency devices are available.

Specifically, in this embodiment, if whether two radio frequency devices are occupied is indicated using two bits, when the two bits are 01 or 10, the capability is limited; if whether two radio frequency devices are occupied is indicated using one bit, when the one bit is 0 or 1, the capability is limited.

The UE starts the timer T1 at a same moment when the UE sends the indication information. Before the expiration of T1, the UE is not allowed to send the capability limited indication information again. Till T1 stops/expires, the UE may send the capability limited indication information again.

In operation 105, the first base station reconfigures a network resource for the MUSIM UE and notifies the reconfigured network resource to the UE.

When the first base station receives the capability limited indication information of the UE, the first base station reconfigures the network resource for the UE and notifies the network resource information to the UE. For example, for resources allocated to two radio frequency devices, the resource of the occupied radio frequency device is deleted. The network resource includes: a beam, a slot, and a BWP. The network resource information may be transmitted using a physical layer signalling or an RRC signalling, where the physical layer signalling is DCI carried on a PDCCH or uplink control information (UCI), and the resource indicated by the RRC signalling may be used directly or may be used after the resource is activated through the DCI on the PDCCH.

The reconfiguration also includes: configuring the timer T 1, and transmitting the value of T 1 to the UE through an RRC signalling.

In operation 106, the MUSIM UE communicates with the first base station and the second base station.

The UE communicates with the first base station using the resource reconfigured by the first base station while the UE is communicating with the second base station.

In operation 107, the MUSIM UE communicates with the second base station.

When the UE has released the RRC connection with the first base station, the UE is in an RRC idle state in the first base station or in an RRC inactive state. For example, if the first base station is a non-5G gNB base station, for example, a LTE eNB base station, the UE is in an RRC idle state; otherwise, if the first base station is a 5G gNB base station, the UE turns to an RRC idle state or an RRC inactive state according to the indication of the RRC signalling of the first base station. If only a signalling radio bearer (SRB2) and at least one data radio bearer (DRB) have been established or only a SRB2 is established in integrated access and backhaul (IAB), the UE releases the RRC connection and then turns to an RRC Inactive state; otherwise, the UE releases the RRC connection and enters an RRC idle state.

The MUSIM UE communicates with the second base station, and at the same time, the UE may send capability updated indication information to the second base station, where the capability updated indication information indicates that the UE can use dual transmitter and dual receiver to communicate with the second base station. The second base station may configure DC or CA for the UE according to the indication information and the UE capability.

The capability updated indication information may be indicated by a single or two bits as that described in operation 104. For example, whether two radio frequency devices are occupied is indicated using two bits b 1b2:
b1b2=11 indicates that the two radio frequency devices are occupied or idle;
b1b2=00 indicates that the two radio frequency devices are idle or occupied; and
b1b2=01 or 10 indicates that one of the two radio frequency devices is occupied, and the other is idle.

Alternatively, whether two radio frequency devices are occupied is indicated using one bit b. For example, b=0 indicates that the capability is limited, that is, one of the two radio frequency devices is occupied, and b=1 indicates that the capability is recovered, that is, the two radio frequency devices are available; or b=0 indicates that the capability is limited, that is, one of the two radio frequency devices is occupied, and b=1 indicates that the capability is recovered, that is, the two radio frequency devices are available.

Specifically, in this embodiment, if whether two radio frequency devices are occupied is indicated using two bits, when the two bits are 11 or 00, the two radio frequency devices are available; if whether two radio frequency devices are occupied is indicated using one bit, when the one bit is 0 or 1, the two radio frequency devices are available.

### Embodiment two

In this embodiment, a communication process in a scenario of sending capability recovered indication information for a CA/DC UE is described.

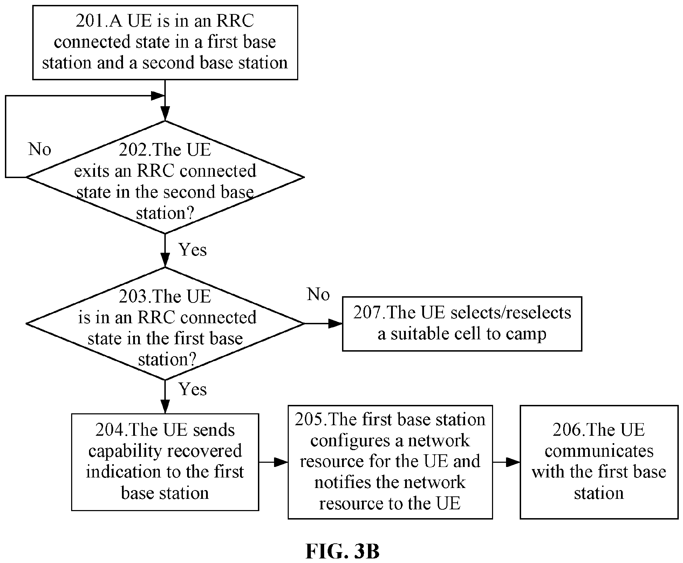

FIG. 3B is a schematic diagram of a communication process according to an embodiment. As shown in FIG. 3B, the communication process includes operations 201 to 207.

In operation 201, a MUSIM UE is in an RRC connected state in a first base station and a second base station.

The SIM-1 and the SIM- 2 in the UE are in an RRC connected state in the first base station and the second base station, respectively, that is, two radio frequency devices of the UE are connected to the first base station and the second base station, respectively.

In operation 202, whether the MUSIM UE releases an RRC connection in the second base station (whether the MUSIM UE exits an RRC connected state) is determined. If the MUSIM UE releases an RRC connection in the second base station, go to operation 203; otherwise, reperform the determination in operation 202.

The UE determines whether the second base station connected to the SIM-2 releases an RRC connection, and if the UE has released the RRC connection with the second base station, the UE is in an RRC idle state or an RRC inactive state in the second base station; otherwise, the SIM-2 of the UE maintains the RRC connection with the second base station, the UE is in an RRC connected state in the second base station, and then the UE reperforms determining whether to release the RRC connection with the second base station.

In operation 203, whether the MUSIM UE maintains an RRC connection in the first base station is determined. If the MUSIM UE maintains an RRC connection in the first base station, go to operation 204; otherwise, go to operation 207.

The UE determines whether the first base station connected to the SIM-1 maintains an RRC connection.

In operation 204, the MUSIM UE sends capability recovered indication information to the first base station.

If the SIM-1 of the UE maintains the RRC connection with the first base station and the RRC connection between the SIM-2 and the second base station is released, one radio frequency device connected to the second base station becomes available, and the UE transmits the capability recovered indication information to the first base station through an RRC signalling, as described in operations 104 or 107 above.

The UE starts the timer T1 at a same moment when the UE sends the indication information. Before the expiration of T1, the UE is not allowed to send the capability recovered indication information again. Till T1 stops/expires, the UE may send the capability recovered indication information again.

In operation 205, the first base station reconfigures a network resource for the MUSIM UE and notifies the network resource to the UE.

When the first base station receives the capability recovered indication information of the UE, the first base station reconfigures the network resource for the UE and notifies the network resource information to the UE. For example, the resource for configuring an available radio frequency device is added to the resource originally allocated to one radio frequency device. The network resource includes a beam, a slot, and a BWP. The network resource information may be transmitted using a physical layer signalling or an RRC signalling, where the physical layer signalling is a DCI carried on a PDCCH or a UCI, and the resource indicated by the RRC signalling may be used directly or may be used after the resource is activated through the DCI on the PDCCH.

The reconfiguration also includes: configuring the timer T 1, and transmitting the value of T 1 to the UE through an RRC signalling.

In operation 206, the MUSIM UE communicates with the first base station.

The UE communicates with the first base station using the network resource reconfigured by the first base station, for example, simultaneously using two radio frequency devices.

In operation 207, the MUSIM UE selects/reselects a suitable cell to camp.

Since the RRC connections of the UE have been released and the UE is in an RRC idle state or an RRC inactive state, the UE may select/reselect a suitable cell to camp according to a cell broadcast message. For example, the UE selects/reselects a suitable cell to camp according to the S criteria of cell selection or the R criteria of cell reselection of the cell broadcast, or the UE selects/reselects a suitable cell to camp according to the frequency priority and the cell measurement result.

### Embodiment three

In this embodiment, a communication process in a scenario of sending interval request information for a UE is described.

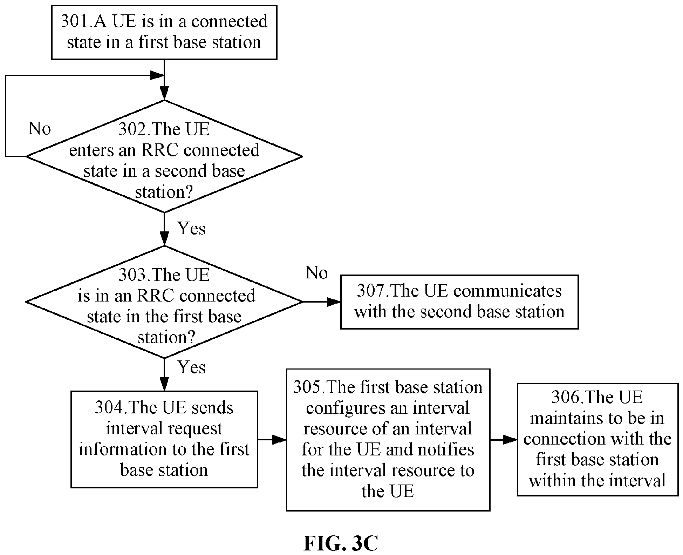

FIG. 3C is a schematic diagram of a communication process according to an embodiment. As shown in FIG. 3C, the communication process includes operations 301 to 307.

In operation 301, a MUSIM UE is in a connected state in a first base station.

In operation 302, whether the MUSIM UE establishes an RRC connection in a second base station is determined. If the MUSIM UE establishes an RRC connection in a second base station, go to operation 303; otherwise, reperform the determination in operation 302.

In operation 303, whether the MUSIM UE maintains an RRC connection in the first base station is determined. If the MUSIM UE maintains an RRC connection in the first base station, go to operation 304; otherwise, go to operation 307.

In operation 304, the MUSIM UE sends interval request information to the first base station.

The UE has only one radio frequency transmitting device, and the UE wishes to maintain an RRC connection in the first base station and, at the same time, needs to be connected to the second base station to transmit and receive data. The interval request information includes: an interval type or an interval length. Further, the aperiodic interval request information includes an interval period, an interval subframe offset, a start radio frame number of an aperiodic interval or a radio subframe number. The interval type includes a periodic interval and an aperiodic interval, the interval period and the interval subframe offset are used for indicating a period length in the period interval and a start subframe in one period, and the interval length is used for indicating the duration of an interval.

The interval request information is used for indicating the interval configuration supported by the UE. When the UE sends the interval request information, the UE starts the corresponding timer T2, and T2 stops/expires when the UE receives the interval configuration information sent by the first base station. Before the expiration of T2, the UE should not send the interval request information again.

In operation 305, the first base station configures an interval resource of an interval for the UE and notifies the interval resource to the UE.

The first base station sets an interval according to the received interval request information, that is, the first base station performs interval configuration according to the request information of the UE, and if the first base station does not support the interval configuration requested by the UE, the first base station sends rejection request response information to the UE. The first base station notifies the interval configuration information to the UE through an RRC signalling.

The reconfiguration also includes: reconfiguring the timer T2, and transmitting the value of T2 to the UE through an RRC signalling.

In operation 306, the MUSIM UE maintains to be in connection with the first base station within the interval.

The UE establishes an RRC connection with the second base station within the interval according to the received interval configuration information. Within the interval, the UE maintains an RRC connection with the first base station.

In operation 307, the MUSIM UE communicates with the second base station.

If the UE disconnects the RRC connection with the first base station according to the indication of the first base station, the UE directly establishes a connection with the second base station and communicates with the second base station.

### Embodiment four

In this embodiment, a communication process in a scenario of sending interval release request information for a UE is described.

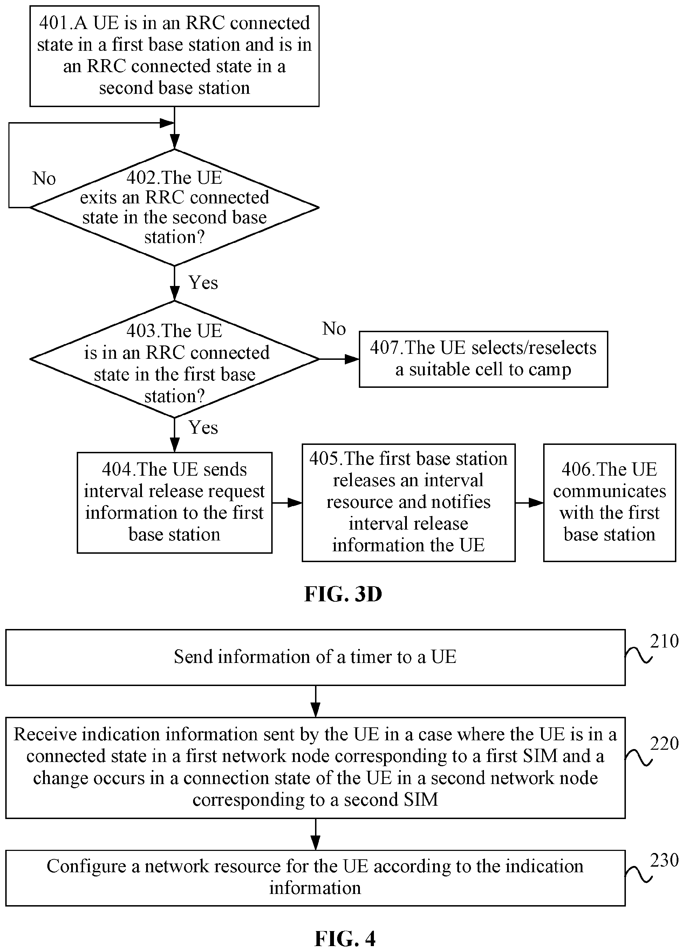

FIG. 3D is a schematic diagram of a communication process according to an embodiment. As shown in FIG. 3D, the communication process includes operations 401 to 407.

In operation 401, a MUSIM UE is in a connected state in a first base station and a second base station.

In operation 402, whether the MUSIM UE releases an RRC connection in the second base station is determined. If the MUSIM UE releases an RRC connection in the second base station, go to operation 403; otherwise, reperform the determination in operation 402.

In operation 403, whether the MUSIM UE maintains an RRC connection in the first base station is determined. If the MUSIM UE maintains an RRC connection in the first base station, go to operation 404; otherwise, go to operation 407.

In operation 404, the MUSIM UE sends interval release request information to the first base station.

Since the UE has disconnected the RRC connection with the second base station, the UE requests the first base station to release an interval. When the UE sends the request information, the UE starts the corresponding timer T2, and T2 stops/expires when the UE receives the release interval information sent by the first base station. Before the expiration of T2, the UE should not send the interval release request information again.

In operation 405, the first base station releases an interval resource and notifies the release interval information to the UE.

The first base station receives the request information of the UE, releases the interval resource according to the request information of the UE, and sends the release interval information to the UE. The release interval information may be implemented using an RRC signalling.

The resource release also includes: reconfiguring the timer T2, and transmitting the value of T2 to the UE through an RRC signalling.

In operation 406, the MUSIM UE communicates with the first base station.

The UE maintains an RRC connection with the first base station and continues to communicate with the first base station.

In operation 407, the MUSIM UE selects/reselects a suitable cell to camp.

Since the RRC connections of the UE have been released and the UE is in an RRC idle state or an RRC inactive state, the UE may select/reselect a suitable cell to camp according to a cell broadcast message. For example, the UE selects/reselects a suitable cell to camp according to the S criteria of cell selection or the R criteria of cell reselection, or the UE selects/reselects a suitable cell to camp according to the frequency priority and the cell measurement result.

In the embodiments of the present application, a resource configuration method is further provided to achieve the network resource configuration of a UE with multiple SIM cards. When a UE which is in an RRC connected state in a first network node enters or exits an RRC connection in a second network node, the UE may indicate the occurrence of a change in its capability to the first network node, and the first network node may reconfigure network resources of the UE accordingly, thereby improving resource utilization. On this basis, the first network node may also configure or release an interval resource according to the request information of the UE. In addition, the UE may be restricted through a timer to prevent the UE from repeatedly transmitting the indication information or the request information, thereby reducing the waste of downlink network resources, lowering the uplink load, and improving the communication reliability and the network operation performance.

FIG. 4 is a flowchart of a resource configuration method according to an embodiment. The embodiment is applied by a first network node.

As shown in FIG. 4, the method provided by this embodiment includes the following operations.

In operation 210, information of a timer is sent to a UE.

In operation 220, indication information sent by the UE in a case where the UE is in a connected state in a first network node corresponding to a first SIM and a change occurs in a connection state of the UE in a second network node corresponding to a second SIM is received.

In operation 230, a network resource for the UE is configured according to the indication information.

In an embodiment, in a case where the change in the connected state is entering an RRC connected state in the second network node, the indication information includes capability limited indication information, and the capability limited indication information is used for indicating a change, with respect to the device communication capability of the UE before the change occurs in the connection state, in the device communication capability of the UE.

In an embodiment, in a case where the change in the connected state is exiting an RRC connected state in the second network node, the indication information includes capability recovered indication information, and the capability recovered indication information is used for indicating a change, with respect to the device communication capability of the UE before the change occurs in the connection state, in the device communication capability of the UE.

In an embodiment, in a case where the change in the connection state is entering an RRC connected state in the second network node, the indication information includes interval request information, and the interval request information is used for indicating an interval configuration supported by the UE.

The operation where the network resource for the UE is configured according to the indication information includes: the network resource for the UE is configured according to the interval request information.

In an embodiment, the operation where the information of the timer is sent to the UE includes: the information of the timer is sent to the UE before the UE sends the indication information; and the indication information is not repeatedly sent before the expiration of the timer.

In an embodiment, the method further includes operation 240, in which, the UE is instructed to stop the timer through an RRC connection reconfiguration signalling.

The resource configuration method described above will be described hereinafter through specific embodiments. In the following embodiments, a first base station serves as the first network node, and a second base station serves as the second network node.

### Embodiment five

In this embodiment, the operations of the first base station include operations 501 to 504.

In operation 501, the first base station communicates with a UE.

In operation 502, the first base station receives the capability updated indication information of the UE.

In operation 503, the first base station reconfigures a network resource for the UE and notifies the network resource information to the UE, where the reconfiguration further includes: reconfiguring the timer T1, and notify the value of T 1 to the UE through an RRC signalling.

In operation 504, the first base station continues to communicate with the UE or releases an RRC connection with the UE.

If the communication of the UE is ended, the beam fails, the link quality is poor or the link fails, the first base station releases the RRC connection of the UE.

### Embodiment six

In this embodiment, the operations of the first base station include operations 601 to 604.

In operation 601, the first base station communicates with a UE.

In operation 602, the first base station receives the interval request information or the interval release request information from the UE.

In operation 603, the first base station configures or releases an interval resource of an interval and notifies interval resource configuration or interval resource release to the UE, where the interval resource configuration or the interval resource release further includes: the configuring timer T2, and notifying the UE of the value of T2 through an RRC signalling.

In operation 604, the first base station maintains an RRC connection with the UE or releases an RRC connection with the UE.

If the communication of the UE is ended, the beam fails, the link quality is poor or the link fails, the first base station releases the RRC connection of the UE.

### Embodiment seven

In this embodiment, the operations of the first base station include operations 701 to 705.

In operation 701, a UE communicates with the first base station.

In operation 702, the UE establishes or releases an RRC connection with a second base station.

In operation 703, the UE sends the capability updated indication information to the first base station, the UE starts a timer T1, and the UE is not allowed to send the capability updated indication information before the expiration of the timer T1.

In operation 704, the UE receives a network resource reconfiguration signalling sent by the first base station, and the network resource reconfiguration signalling further includes the value of the timer T1.

In operation 705, the UE continues to communicate with the first base station or disconnects the connection with the first base station.

If the UE has disconnected the RRC connection with the first base station, the UE selects/reselects a suitable cell to camp. Specifically, the UE may select/reselect a suitable cell to camp according to the indication of a system broadcast message or select/reselect a suitable cell to camp according to the corresponding criteria.

### Embodiment eight

In this embodiment, the operations of the first base station include operations 801 to 805.

In operation 801, a UE communicates with the first base station.

In operation 802, the UE establishes or releases an RRC connection with a second base station.

In operation 803, the UE sends the interval request information or the interval release request information to the first base station, the UE starts a timer T2, and the UE is not allowed to send the indication information before the expiration of the timer T2.

In operation 804, the UE receives an interval configuration signalling or an interval release signalling sent by the first base station, and the interval configuration signalling or the interval release signalling may further include the value of the timer T2.

In operation 805, the UE maintains an RRC connection with the first base station or releases an RRC connection with the first base station.

If the UE has disconnected the RRC connection with the first base station, the UE selects/reselects a suitable cell to camp. Specifically, the UE may select/reselect a suitable cell to camp according to the indication of a system broadcast message or select/reselect a suitable cell to camp according to the corresponding criteria.

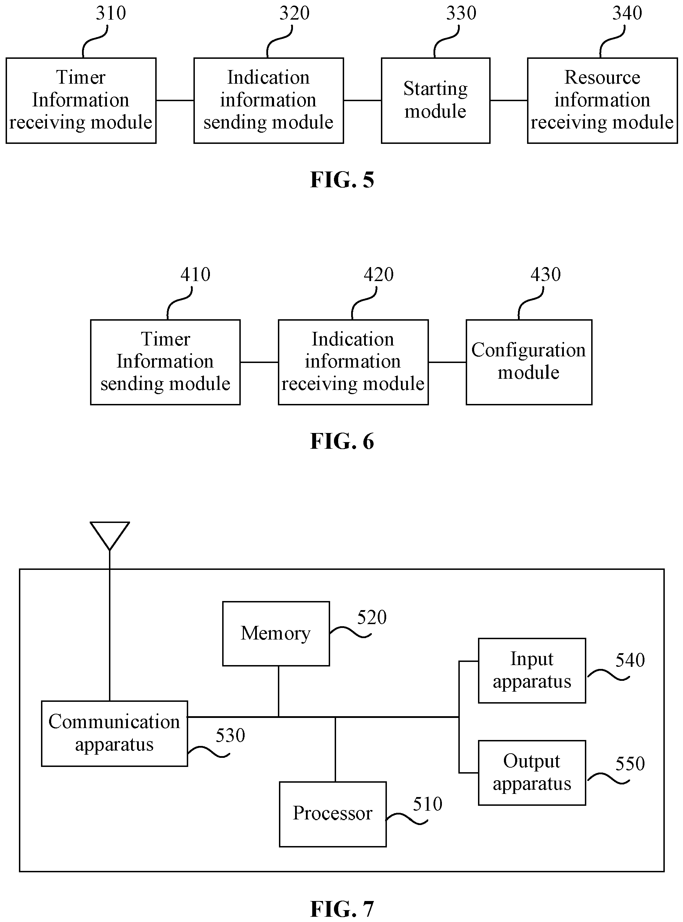

The embodiments of the present application further provide a communication apparatus. FIG. 5 is a structure diagram of a communication apparatus according to an embodiment. As shown in FIG. 5, the communication apparatus includes a timer information receiving module 310, an indication information sending module 320, a starting module 330, and a resource information receiving module 340.

The information of the timer receiving module 310 is configured to receive information of a timer.

The indication information sending module 320 is configured to, in response to being a connected state in a first network node corresponding to a first SIM and a change in a connection state in a second network node corresponding to a second SIM, send indication information to the first network node.

The starting module 330 is configured to start a timer , where the timer is started at a same moment when the indication information is sent.

The resource information receiving module 340 is configured to receive network resource information configured by the first network node according to the indication information.

The communication apparatus in this embodiment can achieve the network communication of the UE with multiple SIM cards. When a UE which is in an RRC connected state in the first network node enters or exits an RRC connection in the second network node, the UE may indicate the occurrence of a change in its capability to the first network node, and the first network node may reconfigure network resources of the UE accordingly, thereby improving resource utilization.

In an embodiment, the information of the timer receiving module 310 is configured to receive the information of the timer sent by the first network node before the indication information is sent to the first network node.

In an embodiment, the change in the connection state includes: entering or exiting an RRC connected state in the second network node, where the UE is in a CA mode or a DC mode.

In an embodiment, the network resource includes at least one of: a beam, a slot or a BWP.

The beam and the slot are indicated through a downlink RRC signalling and transmitted through a PDSCH, and the BWP is indicated through DCI and transmitted through a PDCCH.

In an embodiment, the apparatus further includes a first stopping module.

The first stopping module is configured to stop the timer before expiration of the timer at a same moment when the network resource information is received.

In an embodiment, in a case where the change in the connected state is entering an RRC connected state in the second network node, the indication information includes capability limited indication information, and the capability limited indication information is used for indicating a change, with respect to the device communication capability of the UE before the change occurs in the connection state, in the device communication capability of the UE.

In an embodiment, in a case where the change in the connected state is exiting an RRC connected state in the second network node, the indication information includes capability recovered indication information, and the capability recovered indication information is used for indicating a change, with respect to the device communication capability of the UE before the change occurs in the connection state, in the device communication capability of the UE.

In an embodiment, the capability limited indication information includes at least one of: capability change information, cell release information or configuration resource deactivation information.

In an embodiment, the capability recovered indication information includes at least one of: capability change information or configuration resource activation information.

In an embodiment, the capability change information is indicated through a bitmap and is carried through an uplink RRC signalling.

In an embodiment, in a case where the change in the connection state is entering an RRC connected state in the second network node, the indication information includes interval request information, and the interval request information is used for indicating an interval configuration supported by the UE.

In an embodiment, the apparatus further includes a connection establishing module.

The connection establishing module is configured to establish, in an interval resource configured by the first network node according to indication information, a connection with the second network node, and maintain the connected state in the first network node.

In an embodiment, the interval configuration includes at least one of: an interval type or an interval length.

In an embodiment, the interval configuration further includes at least one of: an interval period, an interval subframe offset, a start radio frame number of an aperiodic interval or a radio subframe number.

In an embodiment, the indication information is not repeatedly sent before the expiration of the timer.

In an embodiment, the apparatus further includes a second stopping module.

The second stopping module is configured to, in response to receiving an RRC connection reconfiguration signalling, stop the timer before expiration of the timer.

In an embodiment, the apparatus further includes an updating module.

The updating module is configured to, in response to having released an RRC connection with the first network node and entering an RRC connected state in the second network node, send capability updated indication information to the second network node, where the capability updated indication information is used for indicating a change, with respect to the device communication capability of the UE before the RRC connection is released, in the device communication capability of the UE.

In an embodiment, the apparatus further includes a communicating module.

The communicating module is configured to, in response to being in the connected state in the first network node and exiting a connected state in the second network node, communicate with the first network node according to the network resource information configured by the first network node.

In an embodiment, the apparatus further includes a residing module.

The residing module is configured to, in response to having released an RRC connection with the first network node and exiting an RRC connected state in the second network node, select or reselect a suitable cell to camp in the first network node or the second network node.

In an embodiment, the indication information is carried through an uplink RRC signalling and transmitted through a PUSCH.

The communication apparatus provided in this embodiment and the communication method provided in the preceding embodiments belong to the same concept. For technical details not described in detail in this embodiment, reference may be made to any one of the preceding embodiments, and this embodiment has the same beneficial effects as the communication method executed.

The embodiments of the present application further provide a resource configuration apparatus. FIG. 6 is a structure diagram of a resource configuration apparatus according to an embodiment. As shown in FIG. 6, the resource configuration apparatus includes a timer information sending module 410, an indication information receiving module 420, and a configuration module 430.

The information of the timer receiving module 410 is configured to send information of a timer to a UE.

The indication information receiving module 420 is configured to receive indication information sent by the UE in a case where the UE is in a connected state in a first network node corresponding to a first SIM and a change occurs in a connection state of the UE in a second network node corresponding to a second SIM.

The configuration module 430 is configured to configure a network resource for the UE according to the indication information.

The resource configuration apparatus in this embodiment can achieve the network resource communication of a UE with multiple SIM cards. When a UE which is in an RRC connected state in the first network node enters or exits an RRC connection in the second network node, the UE may indicate the occurrence of a change in its capability to the first network node, and the first network node may reconfigure network resources of the UE accordingly, thereby improving resource utilization. On this basis, the first network node may also configure or release an interval resource according to the request information of the UE. In addition, the UE may be restricted through a timer to prevent the UE from repeatedly transmitting the indication information or the request information, thereby reducing the waste of downlink network resources, lowering the uplink load, and improving the communication reliability and the network operation performance.

In an embodiment, in a case where the change in the connected state is entering an RRC connected state in the second network node, the indication information includes capability limited indication information, and the capability limited indication information is used for indicating a change, with respect to the device communication capability of the UE before the change occurs in the connection state, in the device communication capability of the UE.

In an embodiment, in a case where the change in the connected state is exiting an RRC connected state in the second network node, the indication information includes capability recovered indication information, and the capability recovered indication information is used for indicating a change, with respect to the device communication capability of the UE before the change occurs in the connection state, in the device communication capability of the UE.

In an embodiment, in a case where the change in the connection state is entering an RRC connected state in the second network node, the indication information includes interval request information, and the interval request information is used for indicating an interval configuration supported by the UE.

The configuration module 430 is configured to configure an interval resource of the UE according to the interval request information.

In an embodiment, the information of the timer sending module 410 is configured to send the information of the timer to the UE before the UE sends the indication information; and
not send the indication information repeatedly before the expiration of the timer.

In an embodiment, the apparatus further includes a reconfiguring module.

The reconfiguring module is configured to instruct the UE to stop the timer through an RRC connection reconfiguration signalling.

The resource configuration apparatus provided in this embodiment and the resource configuration method provided in the preceding embodiments belong to the same concept. For technical details not described in detail in this embodiment, reference may be made to any one of the preceding embodiments, and this embodiment has the same beneficial effects as the resource configuration method executed.

The embodiments of the present application further provide a UE. FIG. 7 is a structure diagram of hardware of a UE according to an embodiment. As shown in FIG. 7, the UE provided in the present application includes multiple SIMs 500, a processor 510, and a memory 520. The one or more processors 510 may be disposed in the UE. In FIG. 7, one processor 510 is used as an example. The memory 520 is configured to store one or more programs. The one or more programs, when executed by the one or more processors 510, enable the one or more processors 510 to implement the communication method in the embodiments of the present application.

The UE further includes a communication apparatus 530, an input apparatus 540, and an output apparatus 550.

The processor 510, the memory 520, the communication apparatus 530, the input apparatus 540, and the output apparatus 550 in the UE may be connected via a bus or other means, and the connection via a bus is illustrated in FIG. 7 as an example.

The input apparatus 540 may be used for receiving inputted digital or character information and for generating key signal input related to user settings of the UE and function control of the UE. The output apparatus 550 may include a display device such as a display screen.

The communication apparatus 530 may include a receiver and a sender. The communication apparatus 530 is configured to perform information transceiving and communication under the control of the processor 510.

As a computer-readable storage medium, the memory 520 may be configured to store software programs, computer-executable programs and modules, such as program instructions/modules (for example, the information of the timer receiving module 310, the indication information sending module 320, the starting module 330, and the resource information receiving module 340 in the communication apparatus) corresponding to the communication method in the embodiments of the present application. The memory 520 may include a program storage region and a data storage region. The computer program storage region may store an operating system and an application program required by at least one function. The data storage region may store data created according to the use of the UE. In addition, the memory 520 may include a high-speed random-access memory and may also include a non-volatile memory such as at least one disk memory, a flash memory or another non-volatile solid-state memory. In some examples, the memory 520 may further include memories remotely disposed relative to the processor 510, and these remote memories may be connected to the UE via a network. Examples of the preceding network include, but are not limited to, the Internet, an intranet, a local area network, a mobile communication network, and combinations thereof.

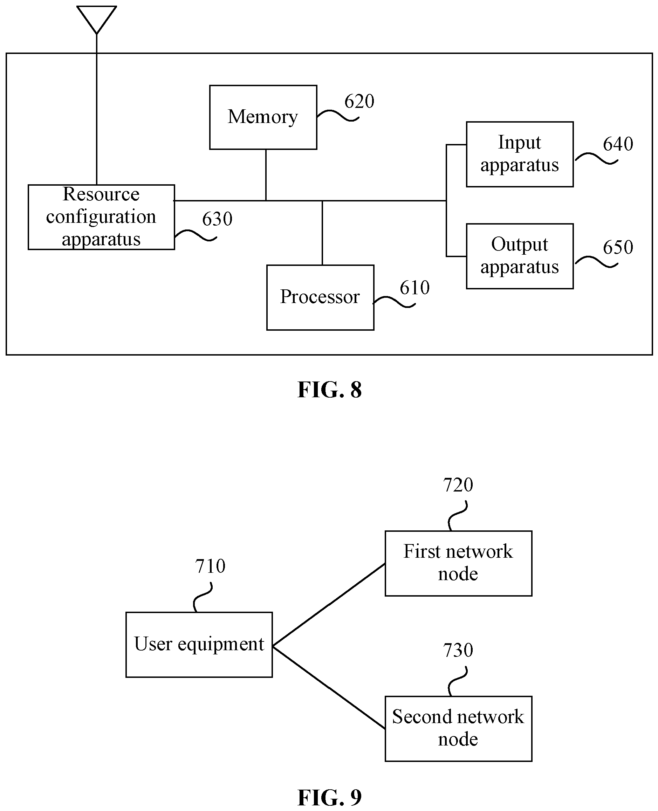

The embodiments of the present application further provide a first network node. FIG. 8 is a structure diagram of hardware of a first network node according to an embodiment. As shown in FIG. 8, the first network node provided in the present application includes a processor 610 and a memory 620. The one or more processors 610 may be disposed in the first network node. In FIG. 8, one processor 610 is used as an example. The memory 620 is configured to store one or more programs. The one or more programs, when executed by the one or more processors 610, enable the one or more processors 610 to implement the resource configuration method in the embodiments of the present application.

The first network node further includes a resource configuration apparatus 630, an input apparatus 640, and an output apparatus 650.

The processor 610, the memory 620, the resource configuration apparatus 630, the input apparatus 640, and the output apparatus 650 in the first network node may be connected via a bus or other means, and the connection via a bus is illustrated in FIG. 8 as an example.

The input apparatus 640 may be configured to receive input digital or character information and to generate key signal input related to user settings and function control of the first network node. The output apparatus 650 may include a display device such as a display screen.

The resource configuration apparatus 630 may include a receiver and a sender. The resource configuration apparatus 630 is configured to perform transceiving communication on information according to the control of the processor 610.

As a computer-readable storage medium, the memory 620 may be configured to store software programs, computer-executable programs and modules, such as program instructions/modules (for example, the information of the timer sending module 410, the indication information receiving module 420, and the configuration module 430 in the resource configuration apparatus) corresponding to the resource configuration method in the embodiments of the present application. The memory 620 may include a program storage region and a data storage region. The computer program storage region may store an operating system and an application program required for at least one function, and the data storage region may store data created according to the use of the first network node. In addition, the memory 620 may include a high-speed random-access memory and may also include a non-volatile memory such as at least one disk memory, a flash memory or another non-volatile solid-state memory. In some examples, the memory 620 can further include memories located remotely relative to the processor 610, and these remote memories can be connected to the first network node via a network. Examples of the preceding network include, but are not limited to, the Internet, an intranet, a local area network, a mobile communication network, and combinations thereof.

The embodiments of the present application further provide a communication system. FIG. 9 is a structure diagram of hardware of a network system according to an embodiment. As shown in FIG. 9, the system includes: the UE 710 in any one of the preceding embodiments, the first network node 720 in any one of the preceding embodiments, and a second network node 730.

The communication system in this embodiment can achieve the network communication of multiple SIM cards. When the UE 710 which is in an RRC connected state in the first network node 720 enters or exits an RRC connection in the second network node 730, the UE 710 may indicate the occurrence of a change in its capability to the first network node 720, and the first network node 720 may reconfigure network resources of the UE accordingly, thereby improving resource utilization. On this basis, the first network node 720 may also configure or release an interval resource according to the request information of the UE. In addition, the UE 710 may be restricted through a timer to prevent the UE from repeatedly transmitting the indication information or the request information before the expiration of the timer, thereby reducing the waste of downlink network resources, lowering the uplink load, and improving the communication reliability and the network operation performance.

The embodiments of the present application further provide a storage medium. The storage medium is configured to store a computer program. The computer program, when executed by a processor, implements the communication method or the resource configuration method in any embodiment of the present application. The communication method includes: information of a timer is received; in response to being a connected state in the first network node corresponding to a first SIM and a change in a connection state in the second network node corresponding to a second SIM, indication information is sent to the first network node; a timer is started, where the timer is started at a same moment when the indication information is sent; and network resource information configured by the first network node according to the indication information is received.

The resource configuration method includes: information of a timer is sent to a UE; indication information sent by the UE in a case where the UE is in a connected state in the first network node corresponding to a first SIM and a change occurs in a connection state of the UE in a second network node corresponding to a second SIM is received; and a network resource for the UE is configured according to the indication information.

The computer storage medium in the embodiments of the present application may adopt any combination of one or more computer-readable media. The computer-readable medium may be a computer-readable signal medium or a computer-readable storage medium. The computer-readable storage medium may be, but is not limited to, an electrical, magnetic, optical, electromagnetic, infrared or semiconductor system, apparatus or device, or any combination thereof. Specific examples (non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device or any suitable combination thereof. The computer-readable storage medium may be any tangible medium that can contain or store a program for use by or in connection with an instruction execution system, apparatus or device.

The computer-readable signal medium may include a propagated data signal with computer-readable program codes embodied therein, for example, in a baseband or as a part of a carrier wave. Such a propagated data signal may take any of a variety of forms, including, but not limited to, electro-magnetic, optical, or any suitable combination thereof. The computer-readable signal medium may be any computer-readable medium that is not a computer-readable storage medium and that can communicate, propagate, or transport a program for use by or in connection with an instruction execution system, apparatus or device.

The computer program codes included on the computer-readable medium may be transmitted via any suitable medium which includes, but is not limited to, a wire, an optical cable, a radio frequency (RF), or any suitable combination thereof.

Computer program codes for performing operations of the present application may be written in one or more programming languages or combinations thereof. The computer programming languages include object-oriented programming languages such as Java, Smalltalk, and C++, and further include conventional procedural programming languages such as C language or similar programming languages. The computer program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet through an Internet service provider).

The preceding are example embodiments of the present application and are not intended to limit the scope of the present application.

It is to be understood by those skilled in the art that the term "user terminal" covers any suitable type of wireless user devices, for example, a mobile phone, a portable data processing apparatus, a portable web browser or a vehicle-mounted mobile station.

In general, the various embodiments of the present application may be implemented in hardware or special-purpose circuits, software, logic or any combination thereof. For example, some aspects may be implemented in hardware while other aspects may be implemented in firmware or software that may be executed by a controller, a microprocessor or other computing apparatuses, though the present application is not limited thereto.

The embodiments of the present application may be implemented through the execution of computer program instructions by a data processor of a mobile apparatus, for example, implemented in a processor entity, by hardware, or by a combination of software and hardware.

The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules, and functions, or may represent a combination thereof. Computer programs may be stored on the memory. The memory may be of any type suitable for a local technical environment and may be implemented using any suitable data storage technology. The memory may be, but is not limited to, a ROM, a RAM, or an optical memory apparatus and system (for example, a digital video disc (DVD) or a compact disk (CD)). The computer-readable medium may include a non-transitory storage medium. The data processor may be of any type suitable to the local technical environment such as, but not limited to, a general-purpose computer, a special-purpose computer, a microprocessor, digital signal processing (DSP), an application-specific integrated circuit (ASIC), a field-programmable gate array (FPGA), and a processor based on a multi-core processor architecture.

The detailed description of example embodiments of the present application has been provided above through exemplary and non-restrictive examples. However, considering the drawings and the claims, various modifications and adjustments to the preceding embodiments are apparent to those skilled in the art without departing from the scope of the present application. Accordingly, the proper scope of the present application is determined according to the claims.

## Claims

1. A communication method, applied by a user equipment, UE, wherein the UE comprises a plurality of subscriber identity modules, SIMs, the plurality of SIMs comprise a first SIM and a second SIM, and the method comprises:
receiving information of a timer;
in response to being in a connected state in a first network node corresponding to the first SIM and a change in a connection state in a second network node corresponding to the second SIM, sending indication information to the first network node;
starting the timer, where the timer is started at a same moment when the indication information is sent; and
receiving network resource information configured by the first network node according to the indication information.

2. The method of claim 1, wherein receiving the information of the timer comprises:
receiving the information of the timer sent by the first network node before the indication information is sent to the first network node.

3. The method of claim 1, wherein the change in the connection state comprises: entering or exiting a radio resource control, RRC, connected state in the second network node; and wherein the UE is in a carrier aggregation mode or a dual-connectivity mode.

4. The method of claim 1, wherein the network resource information comprises at least one of:
beam information, slot information or bandwidth part, BWP, information;
wherein the beam information and the slot information are indicated through a downlink RRC signalling and transmitted through a physical downlink shared channel, PDSCH, and the BWP information is indicated through downlink control information, DCI, and transmitted through a physical downlink control channel, PDCCH.

5. The method of claim 1, further comprising:
stopping the timer before expiration of the timer at a same moment when the network resource information is received.

6. The method of claim 1, wherein in a case where the change in the connection state is entering an RRC connected state in the second network node, the indication information comprises capability limited indication information, and the capability limited indication information is used for indicating a change, with respect to a device communication capability of the UE before the change occurs in the connection state, in the device communication capability of the UE.

7. The method of claim 1, wherein in a case where the change in the connection state is exiting an RRC connected state in the second network node, the indication information comprises capability recovered indication information, and the capability recovered indication information is used for indicating a change, with respect to a device communication capability of the UE before the change occurs in the connection state, in the device communication capability of the UE.

8. The method of claim 6, wherein the capability limited indication information comprises at least one of: capability change information, cell release information or configuration resource deactivation information.

9. The method of claim 7, wherein the capability recovered indication information comprises at least one of: capability change information or configuration resource activation information.

10. The method of claim 8 or 9, wherein the capability change information is indicated through a bitmap and is carried through an uplink RRC signalling.

11. The method of claim 1, wherein in a case where the change in the connection state is entering an RRC connected state in the second network node, the indication information comprises interval request information, and the interval request information is used for indicating an interval configuration supported by the UE.

12. The method of claim 11, further comprising:
establishing, in an interval resource configured by the first network node according to indication information, a connection with the second network node, and maintaining the connected state in the first network node.

13. The method of claim 11, wherein the interval configuration comprises at least one of: an interval type or an interval length.

14. The method of claim 13, wherein the interval configuration further comprises at least one of:
an interval period, an interval subframe offset, a start radio frame number of an aperiodic interval or a radio subframe number.

15. The method of claim 1, wherein the indication information is not sent repeatedly before expiration of the timer.

16. The method of claim 1, further comprising:
in response to receiving an RRC connection reconfiguration signalling, stopping the timer before expiration of the timer.

17. The method of claim 1, further comprising:
in response to having released an RRC connection with the first network node and entering an RRC connected state in the second network node, sending capability updated indication information to the second network node, wherein the capability updated indication information is used for indicating a change, with respect to a device communication capability of the UE before the RRC connection is released, in the device communication capability of the UE.

18. The method of claim 1, further comprising:
in response to being in the connected state in the first network node and exiting a connected state in the second network node, communicating with the first network node according to the network resource information configured by the first network node.

19. The method of claim 1, further comprising:
in response to having released an RRC connection with the first network node and exiting an RRC connected state in the second network node, selecting or reselecting a suitable cell to camp in the first network node or the second network node.

20. The method of claim 1, wherein the indication information is carried through an uplink RRC signalling and transmitted through a physical uplink shared channel, PUSCH.

21. A resource configuration method, applied by a first network node, comprising:
sending information of a timer to a user equipment, UE;
receiving indication information sent by the UE in a case where the UE is in a connected state in a first network node corresponding to a first subscriber identity module, SIM, and a change occurs in a connection state of the UE in a second network node corresponding to a second SIM; and
configuring a network resource for the UE according to the indication information.

22. The method of claim 21, wherein in a case where the change in the connected state is entering a radio resource control, RRC, connected state in the second network node, the indication information comprises capability limited indication information, and the capability limited indication information is used for indicating a change, with respect to a device communication capability of the UE before the change occurs in the connection state, in the device communication capability of the UE.

23. The method of claim 21, wherein in a case where the change in the connection state is exiting an RRC connected state in the second network node, the indication information comprises capability recovered indication information, and the capability recovered indication information is used for indicating a change, with respect to a device communication capability of the UE before the change occurs in the connection state, in the device communication capability of the UE.

24. The method of claim 21, wherein in a case where the change in the connection state is entering an RRC connected state in the second network node, the indication information comprises interval request information, and the interval request information is used for indicating an interval configuration supported by the UE; and
wherein configuring the network resource for the UE according to the indication information comprises:
configuring an interval resource of the UE according to the interval request information.

25. The method of claim 21, wherein sending the information of the timer to the UE comprises:
sending the information of the timer to the UE before the UE sends the indication information; and
not sending the indication information repeatedly during operation of a timer.

26. The method of claim 21, further comprising:
instructing the UE to stop the timer through an RRC connection reconfiguration signalling.

27. A user equipment, comprising a plurality of subscriber identity modules, SIMs, a memory, and at least one processor;
wherein the memory is configured to store at least one program; and
the at least one program, when executed by the at least one processor, enables the at least one processor to implement the communication method of any one of claims 1 to 20.

28. A first network node, comprising a memory and at least one processor;
wherein the memory is configured to store at least one program; and
the at least one program, when executed by the at least one processor, enables the at least one processor to implement the recourse configuration method of any one of claims 21 to 26.

29. A communication system, comprising the user equipment of claim 27, the first network node of claim 28, and a second network node.

30. A computer-readable storage medium, wherein the computer-readable storage medium is configured to store a computer program, and the computer program, when executed by a processor, is used for implementing the communication method of any one of claims 1 to 20 or the recourse configuration method of any one of claims 21 to 26.
